(19) Europäisches Patentamt
European Patent Office
Office européen des brevets

(11) **EP 3 937 090 A1**

(12) **EUROPEAN PATENT APPLICATION**

(43) Date of publication:
**12.01.2022 Bulletin 2022/02**

(51) Int Cl.:
***G06N 7/00*** (2006.01)

(21) Application number: **21165516.2**

(22) Date of filing: **29.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.07.2020 JP 2020118382**

(71) Applicant: **FUJITSU LIMITED**
**Kanagawa 211-8588 (JP)**

(72) Inventor: **Sazawa, Shinichi**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING SYSTEM, INFORMATION PROCESSING METHOD, AND PROGRAM**

(57)      An information processing system includes: a search circuit configured to in regard to a problem represented by an energy function that contains a plurality of state variables, obtain a neighborhood depth that indicates a number of the state variables to be changed per one state transition in a search for a solution to the problem, and execute the search for the solution to the problem by using the obtained neighborhood depth; and a processing circuit configured to calculate a first index that indicates a degree of improvement in a solution accuracy by a first neighborhood depth, calculate a second index that indicates a degree of the improvement in the solution accuracy by a second neighborhood depth, and output the neighborhood depth to be set in the search circuit based on the first index and the second index.

FIG. 1

**Description**

FIELD

The embodiments discussed herein are related to an information processing system, an information processing method, and a program.

BACKGROUND

There is an information processing device that calculates a multivariable combinatorial optimization problem, which the von Neumann computer is not good at, by replacing the combinatorial optimization problem with an Ising model, which is a model representing the behavior of spins in a magnetic material. Approaches for solving the problem replaced with the Ising model in a practical time include, for example, the simulated annealing (SA) method and the Markov Chain Monte Carlo (MCMC) method such as the replica exchange method. The combinatorial optimization problem is formulated by an energy function containing a plurality of state variables. The energy function is sometimes called an objective function or an evaluation function or the like. The information processing device searches for a ground state of the Ising model that minimizes the value of the energy function, by repeatedly trying state transitions caused by changing the values of the state variables using the MCMC method. The ground state corresponds to the optimum solution of the combinatorial optimization problem.

For example, there is a proposal of a combinatorial optimization device in which a plurality of processor elements performs collaborative optimization by exchanging combination information retained by each processor element during optimization.

Furthermore, there is also a proposal of a state space search technique that enables transitions in the distance 2, distance 3, and the like, as transitions of "state of interest". Here, in the proposed search technique, a distance n means that at least n state transitions are needed to reach one state from another state.

Moreover, there is a proposal of an optimization device that executes the replica exchange method. The proposed optimization device observes the energy in each annealed section at every certain iterations and exchanges reverse temperatures to be supplied to two annealed sections based on an exchange probability according to the energy and temperature.

Examples of the related art include Japanese Laid-open Patent Publication No. 06-309408, Japanese Laid-open Patent Publication No. 2004-70662, and Japanese Laid-open Patent Publication No. 2019-160293.

As described above, it is conceivable to make the number of state variables to be changed per transition from a particular state to the next state, which is one state transition, greater than one. For example, by making the number of state variables to be changed per one state transition variable in a search and making the number greater stepwise, the accuracy of the obtained solution may improve, but the time taken for the search increases. It is not easy to appropriately determine the number of state variables to be changed per one state transition according to the problem, the search situation, and the like.

In one aspect, the present embodiments aim to provide an information processing system, an information processing method, and a program that achieve an efficient search.

SUMMARY

According to an aspect of the embodiments, an information processing system includes: a search circuit configured to in regard to a problem represented by an energy function that contains a plurality of state variables, obtain a neighborhood depth that indicates a number of the state variables to be changed per one state transition in a search for a solution to the problem, and execute the search for the solution to the problem by using the obtained neighborhood depth; and a processing circuit configured to acquire a first value of the energy function for an initial solution of a search at a first neighborhood depth and a second value of the energy function for a first solution obtained by the search at the first neighborhood depth, calculate a first index that indicates a degree of improvement in a solution accuracy by the first neighborhood depth based on the first value and the second value, acquire a third value of the energy function for an initial solution of a search at a second neighborhood depth and a fourth value of the energy function for a second solution obtained by the search at the second neighborhood depth, calculate a second index that indicates a degree of the improvement in the solution accuracy by the second neighborhood depth based on the third value and the fourth value, and output the neighborhood depth to be set in the search circuit based on the first index and the second index.

The object and advantages of the invention will be realized and attained by means of the elements and combinations particularly pointed out in the claims.

It is to be understood that both the foregoing general description and the following detailed description are exemplary and explanatory and are not restrictive of the invention.

In one aspect, an efficient search may be achieved.

BRIEF DESCRIPTION OF DRAWINGS

FIG. 1 is a diagram explaining an information processing system according to a first embodiment;
FIG. 2 is a diagram illustrating an information processing system according to a second embodiment;
FIG. 3 is a diagram illustrating a hardware example of a control device;
FIG. 4 is a diagram illustrating a hardware example of a node;
FIG. 5 is a diagram illustrating a functional example of the information processing system;
FIG. 6 is a diagram illustrating an example in which a solution is represented by a permutation of a plurality of elements;
FIG. 7 is a diagram illustrating an example of a 2-opt neighborhood;
FIG. 8 is a diagram illustrating an example of solution accuracy improvement rate data;
FIG. 9 is a diagram illustrating a calculation example of solution accuracy improvement evaluation values;
FIG. 10 is a diagram illustrating an example of a neighborhood depth table;
FIG. 11 is a flowchart illustrating a processing example of the control unit;
FIG. 12 is a flowchart illustrating a processing example of a search unit; and
FIG. 13 is a diagram illustrating another hardware example of the node.

DESCRIPTION OF EMBODIMENTS

Hereinafter, the present embodiments will be described with reference to the drawings.

[First Embodiment]

A first embodiment will be described.

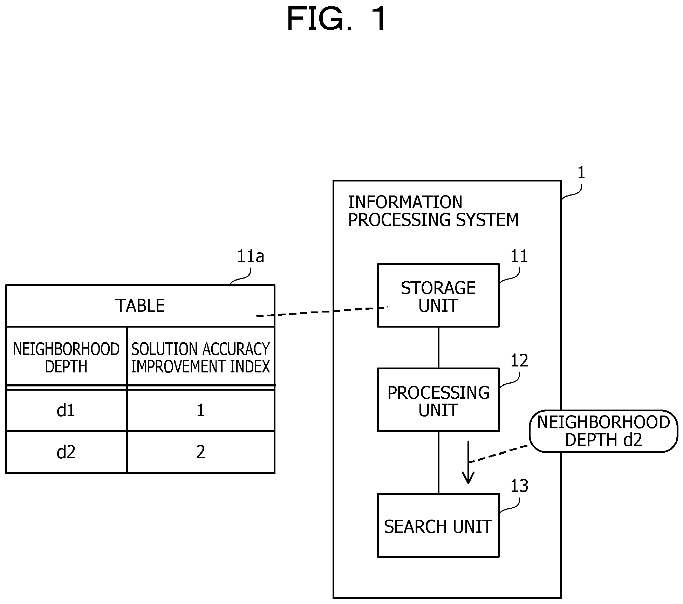

FIG. 1 is a diagram explaining an information processing system according to the first embodiment.
The information processing system 1 searches for a solution to a combinatorial optimization problem and outputs the solution. The information processing system 1 includes a storage unit 11, a processing unit 12, and a search unit 13.
The storage unit 11 may be a volatile storage device such as a random access memory (RAM), or may be a nonvolatile storage device such as a hard disk drive (HDD) or a flash memory.
The processing unit 12 may include a central processing unit (CPU), a digital signal processor (DSP), an application specific integrated circuit (ASIC), a field programmable gate array (FPGA), and the like. The processing unit 12 may be a processor that executes a program. The "processor" may include a set of a plurality of processors (multiprocessor).
The search unit 13 is achieved by an integrated circuit such as a CPU, DSP, ASIC, graphics processing unit (GPU), and FPGA. Furthermore, although not illustrated, the search unit 13 may include a storage unit such as a random access memory (RAM) or a register. For example, a search circuit achieved using an integrated circuit such as an FPGA may function as the search unit 13. As will be described later, the information processing system 1 may include a plurality of search units including the search unit 13.
Based on an Ising-type energy function obtained by formulating a combinatorial optimization problem, the search unit 13 changes the state of an Ising model represented by a set of values of a plurality of state variables contained in the energy function, to thereby search for a solution that minimizes the value of the energy function. The value of the energy function is an energy value corresponding to the state of the Ising model. The state of the Ising model is sometimes referred to as a state. The state variable is a binary variable that takes a value of "0" or "1". The solution that minimizes the value of the energy function corresponds to the ground state of the Ising model. Furthermore, the solution worked out by the search unit 13 is represented by a set of a plurality of state variables. The ground state of the Ising model corresponds to the optimum solution of the combinatorial optimization problem. For example, the SA method or the MCMC method such as the replica exchange method is used for the search for a solution.
Here, an Ising-type energy function E(x) is represented by, for example, expression (1).

$$E(\boldsymbol{x}) = -\sum_{\langle i,j \rangle} W_{ij} x_i x_j - \sum_i b_i x_i \qquad (1)$$

A state vector x has a plurality of state variables as elements and represents the state of the Ising model. In the case of a problem of maximizing the value of an objective function, the sign of the objective function only needs to be reversed.

The first term on the right side of expression (1) is to integrate products of values of two state variables and a weighing coefficient without omission and duplication for all combinations of two state variables that may be selected from all the state variables. The reference $x_i$ indicates an i-th state variable. The reference $x_j$ indicates a j-th state variable. The reference $W_{ij}$ indicates a weight between the i-th state variable and the j-th state variable, or a weighing coefficient indicating the coupling strength.

The second term on the right side of expression (1) is to work out a sum of products of each bias coefficient of all the state variables and the state variable value. The reference $b_i$ indicates the bias coefficient for the i-th state variable.

For example, a value "-1" of a spin in the Ising model corresponds to a value "0" of the state variable. A value "+1" of a spin in the Ising model corresponds to a value of "1" of the state variable. For this reason, the state variable may also be called a bit that takes a value of 0 or 1.

Here, when the value of the state variable $x_i$ in expression (1) changes to $1 - x_i$, an increment of the state variable $x_i$ may be represented as $\delta x_i = (1 - x_i) - x_i = 1 - 2x_i$. Therefore, with respect to the energy function $E(x)$, an energy value change amount $\Delta E_i$ due to a change in the state variable $x_i$ is represented by expression (2).

$$\Delta E_i = E(\boldsymbol{x})\Big|_{x_i \to 1 - x_i} - E(\boldsymbol{x})$$
$$= -\delta x_i \left( \sum_j W_{ij} x_j + b_i \right) \qquad (2)$$

Here, for example, it is conceivable to use the steepest descent method for a search for the ground state that minimizes the energy value. However, with the steepest descent method, once the process falls into a local solution, it is difficult to escape from the local solution.

Thus, in the search unit 13, the Metropolis method and the Gibbs method are used to determine whether or not to allow a state transition (a change in the value of the state variable $x_i$) in which the energy value change amount matches $\Delta E_i$ in the search for the ground state. For example, in a neighbor search for searching a transition from a particular state to another state in which the energy value is lower than the energy value in the particular state, the search unit 13 probabilistically allows a transition to not only a state where the energy value is decreased but also a state where the energy value is increased.

The search unit 13 verifies whether or not to allow the value of the state variable to change, based on the comparison result between the energy value change amount when the value of any state variable among the plurality of state variables is changed and a noise value. When it is verified that the change is to be allowed, the search unit 13 generates a state transition by altering the value of the relevant state variable. The noise value is worked out based on the temperature value or the random number. The greater the temperature value, the greater the amplitude of the noise value. The greater the amplitude of the noise value, the easier a state transition with a great amount of increase in the energy value is allowed.

The search unit 13 may assign the number of state variables to be changed per one state transition as an integer equal to or greater than one. Furthermore, the number of state variables to be changed per one state transition in the search unit 13 may be variably controlled. Here, the number of state variables to be changed per one state transition is sometimes referred to as the neighborhood depth. In addition, the distance between a particular state and another state is called the Hamming distance. The Hamming distance indicates the number of state variables with different values from each other between a particular state and another state, which is the number of different bits. Note that "one state transition" has the same meaning as "one time of state transition".

The search in the search unit 13 is performed by repeatedly trying state transitions from a particular initial solution until a predetermined end condition is satisfied. The initial solution indicates a state as the starting point of the search. The predetermined end condition is that, for example, no other solution that enhances the energy value may be obtained even by a predetermined number of subsequent state transition trials after reaching a solution with a particular energy value, or a certain amount of time has passed since a search is started. The information processing system 1 provides a function of adjusting the neighborhood depth according to the problem and the search situation.

The storage unit 11 stores data used for the process of the processing unit 12. For example, the storage unit 11 stores a table 11a. The table 11a includes items of a neighborhood depth and a solution accuracy improvement index. The neighborhood depth is registered in the item of the neighborhood depth. The solution accuracy improvement index is registered in the item of the solution accuracy improvement index. The solution accuracy improvement index is an index representing the degree of improvement in the accuracy of the solution obtained using a relevant neighborhood depth. The accuracy of the solution, which is referred to as the solution accuracy, represents the certainty that the obtained solution is the solution that minimizes the energy value, which is the optimum solution. For example, the higher the solution accuracy, the higher the possibility of the optimum solution, and the lower the solution accuracy, the lower the possibility of the optimum solution. Furthermore, the greater the solution accuracy improvement index, the higher the possibility of approaching the optimum solution by searching at a relevant neighborhood depth, and the smaller the solution accuracy improvement index, the lower the possibility of approaching the optimum solution by searching at a relevant neighborhood depth. As will be described later, the solution accuracy improvement index is evaluated based on the difference between the energy value of the initial solution of the search and the energy value of the solution obtained by the search.

The processing unit 12 acquires a first value of the energy function for the initial solution of a search at a particular neighborhood depth and a second value of the energy function for a solution obtained by the search at the particular neighborhood depth. Furthermore, when the time taken for each search is different, the processing unit 12 further acquires the time. The time taken for the search to obtain a particular solution is sometimes referred to as a search time. The processing unit 12 may acquire the first value and the second value from the search unit 13, or may acquire the solution obtained by the initial solution and the search to calculate the first value and the second value using expression (1). Furthermore, the processing unit 12 may acquire the search time from the search unit 13, or may acquire the search time by measuring the search time in the processing unit 12.

Based on the first value and the second value, the processing unit 12 calculates an index indicating the degree of improvement in the solution accuracy by a relevant neighborhood depth. The above-mentioned solution accuracy improvement index corresponds to the index indicating the degree of improvement in the solution accuracy. For example, the processing unit 12 computes a value that is obtained by subtracting the second value from the first value and then dividing the value of the subtraction result by the search time, as the solution accuracy improvement index. In this case, assuming that the first value is denoted by E1, the second value is denoted by E2, and the search time is denoted by T, the solution accuracy improvement index is represented as $V = (E1 - E2)/T$. The shorter the search time T and the greater the enhancement range (E1 - E2) of the energy value from the initial solution, the greater the solution accuracy improvement index V. When the search time is unchanged for all times, the processing unit 12 may assign T = 1.

The processing unit 12 may perform searches at the same neighborhood depth n times (n is an integer equal to or greater than two) to work out n solution accuracy improvement indexes V1, V2, ..., Vn for the relevant neighborhood depth, and assign an average of the worked-out n solution accuracy improvement indexes (V1 + V2 + ... + Vn)/n as the solution accuracy improvement index V for the neighborhood depth. This improves the evaluation accuracy of the solution accuracy improvement index V. At this time, the same initial solution may be employed at each of the n times of searches. This enables the evaluation of the solution accuracy improvement index V for the relevant initial solution and neighborhood depth.

The processing unit 12 outputs a neighborhood depth to be set in the search unit 13, based on a plurality of indexes calculated for a plurality of neighborhood depths set in the search unit for a plurality of searches. For example, the processing unit 12 calculates a solution accuracy improvement index "1" for a neighborhood depth d1 by the above evaluation approach, and registers the calculated solution accuracy improvement index in the table 11a. Furthermore, the processing unit 12 calculates a solution accuracy improvement index "2" for a neighborhood depth d2 by the above evaluation approach, and registers the calculated solution accuracy improvement index in the table 11a. For example, the same initial solution may be employed in the search in which the solution accuracy improvement index is produced for the neighborhood depth d1 and the search in which the solution accuracy improvement index is produced for the neighborhood depth d2. This enables the evaluation of the solution accuracy improvement index for each neighborhood depth using a common reference and different neighborhood depths.

Note that the table 11a illustrates an example in which the number of used neighborhood depths is two, which are d1 and d2, but the number of neighborhood depths to be used may be three or more.

For example, according to the table 11a, the solution accuracy improvement index of the neighborhood depth d1 is "1", and the solution accuracy improvement index of the neighborhood depth d2 is "2". In this case, the processing unit 12 preferentially selects the neighborhood depth d2 over the neighborhood depth d1, and outputs the selected neighborhood depth d2 as a neighborhood depth to be set in the search unit 13. For example, as a method of preferentially selecting, it is conceivable to make the probability that the neighborhood depth d2 is selected higher than the case of the neighborhood depth d1. For example, the processing unit 12 assigns the probability that the neighborhood depth d2 is selected as 2/3 and the probability that the neighborhood depth d1 is selected as 1/3, based on the solution accuracy improvement indexes of the neighborhood depths d1 and d2. As an example of such a method, a conceivable method for the processing unit 12 is a method of generating a uniform random number a that meets $0 \le a < 1$, and selecting the neighborhood depth d2 when a < 2/3 holds, while selecting the neighborhood depth d1 when $a \ge 2/3$ holds. For example, when the information processing system 1 includes a plurality of search units, the processing unit 12 may set each of the plurality of search units with any of the neighborhood depths d1 and d2 by the method. By setting in this manner, in the example of the table 11a, it is expected that the proportion of the number of search units in which the neighborhood depth d1 is set is given as about 1/3, and the proportion of the number of search units in which the neighborhood depth d2 is set is given as about 2/3.

For example, the processing unit 12 outputs the selected neighborhood depth to the search unit 13, and causes the search unit 13 to execute the next search using the output neighborhood depth. The processing unit 12 may generate an initial solution for the next search based on, for example, the best solution among solutions obtained in the previous search, and set the generated initial solution in the search unit 13. Here, the best solution among solutions obtained in the previous search is the solution having the smallest energy value among the solutions obtained in the previous search. For example, the processing unit 12 may generate the next initial solution by changing some state variables of the best solution.

The processing unit 12 repeatedly executes the above process, and records solutions obtained from the search unit 13 during the process in the storage unit 11. The processing unit 12 presents, to a user, the best solution among the solutions recorded in the storage unit 11 during a certain period of time, as the final solution. For example, the processing unit 12 displays the final solution or information obtained by converting the solution into a format of the solution to the combinatorial optimization problem, on a display device connected to the information processing system 1, or transmits the final solution or the information to an information processing device used by the user through a network.

According to the information processing system 1, in regard to a problem represented by an energy function containing a plurality of state variables, the neighborhood depth indicating the number of state variables to be changed per one state transition in a search for a solution to the problem is set in the search unit 13. The search unit 13 executes a search for a solution to the problem based on the set neighborhood depth. The processing unit 12 acquires the first value of the energy function for the initial solution of a search at a first neighborhood depth and a second value of the energy function for a first solution obtained by the search at the first neighborhood depth. The processing unit 12 calculates a first index indicating the degree of improvement in a solution accuracy by the first neighborhood depth, based on the first value and the second value. The processing unit 12 acquires a third value of the energy function for the initial solution of a search at a second neighborhood depth and a fourth value of the energy function for a second solution obtained by the search at the second neighborhood depth. The processing unit 12 calculates a second index indicating the degree of improvement in a solution accuracy by the second neighborhood depth, based on the third value and the fourth value. The processing unit 12 outputs a neighborhood depth to be set in the search unit 13, based on the first index and the second index.

This makes it possible to achieve an efficient search.

Here, by making the number of state variables to be changed per one state transition in a search, which is the neighborhood depth, variable and making the neighborhood depth greater stepwise, the accuracy of the obtained solution may improve, but the time taken for the search increases. It is not easy to determine the neighborhood depth appropriately according to the problem, the search situation, and the like.

In contrast to this, the processing unit 12 calculates the solution accuracy improvement index for each neighborhood depth, on the basis of the solutions obtained as results of searches at different neighborhood depths. Then, the processing unit 12 verifies the contribution to the solution accuracy improvement for each neighborhood depth, according to the relevant problem, the current search situation, and the like, based on the solution accuracy improvement index for each neighborhood depth, and preferentially selects a neighborhood depth that is estimated to significantly contribute to the solution accuracy improvement. For example, the processing unit 12 may cause the search unit 13 to efficiently execute the search by causing the search unit 13 to execute a search using the selected neighborhood depth. As a result, the possibility that the search unit 13 reaches a better solution is raised, and the performance of working out a solution by the search unit 13 is improved. For example, it is possible to raise the possibility of reaching the optimum solution or a solution whose energy value is smaller than a target value prescribed in advance, within a predetermined time.

[Second Embodiment]

Next, a second embodiment will be described.

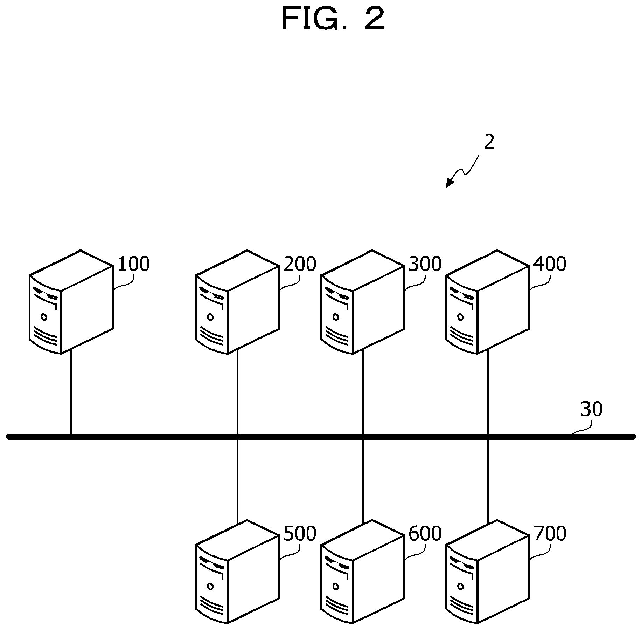

FIG. 2 is a diagram illustrating an information processing system according to the second embodiment.

The information processing system 2 includes a control device 100 and nodes 200, 300, 400, 500, 600, and 700. The control device 100 and the nodes 200 to 700 are connected to a network 30. Examples of the network 30 may include a local area network (LAN), a wide area network (WAN), and the Internet.

The control device 100 is a device that controls the nodes 200 to 700. The control device 100 may be, for example, an information processing device such as a computer. The control device 100 accepts an input of information on a combinatorial optimization problem from the user, and converts the information on the combinatorial optimization problem into a problem in an Ising form. The problem in the Ising form is a problem of minimizing the value of the energy function in expression (1). The control device 100 transmits data of the problem in the Ising form to the nodes 200 to 700, and causes the nodes 200 to 700 to search for solutions to the problem. The control device 100 also sets the neighborhood depth for each of the nodes 200 to 700.

The nodes 200 to 700 search for solutions to the problem in the Ising form. The nodes 200 to 700 may be, for example, information processing devices such as computers. The nodes 200 to 700 search for solutions to a common problem received from the control device 100.

For example, the nodes 200 to 700 include accelerators that search for solutions to the problem in the Ising form. The accelerator is a piece of hardware that uses the SA method or the MCMC method such as the replica exchange method to work out, as solutions, the values of a plurality of state variables that minimize the Ising-type energy function $E(x)$ represented by expression (1). However, the solution search function provided by the node 200 may be implemented by software.

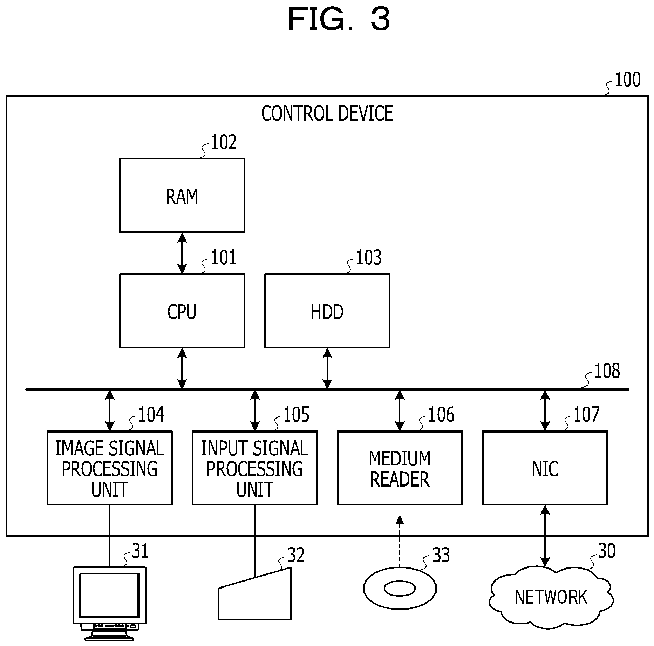

FIG. 3 is a diagram illustrating a hardware example of the control device.

The control device 100 includes a CPU 101, a RAM 102, an HDD 103, an image signal processing unit 104, an input signal processing unit 105, a medium reader 106, a network interface card (NIC) 107, and a bus 108. Note that the CPU 101 is an example of the processing unit 12 according to the first embodiment. The RAM 102 or the HDD 103 is an example of the storage unit 11 according to the first embodiment.

The CPU 101 is a processor that executes a program command. The CPU 101 loads at least a part of the program and data stored in the HDD 103 into the RAM 102, and executes the program. Note that the CPU 101 may include a plurality of processor cores. Furthermore, the control device 100 may include a plurality of processors. The process described below may be executed in parallel using a plurality of processors or processor cores. Furthermore, a set of a plurality of processors is sometimes referred to as a "multiprocessor" or simply a "processor".

The RAM 102 is a volatile semiconductor memory that temporarily stores the program executed by the CPU 101 and the data used by the CPU 101 for operations. Note that the control device 100 may include any type of memory other than the RAM 102, or may include a plurality of memories.

The HDD 103 is a nonvolatile storage device that stores software programs such as an operating system (OS), middleware, and application software, and data. Note that the control device 100 may include another type of storage device such as a flash memory or a solid state drive (SSD), and may include a plurality of nonvolatile storage devices.

The image signal processing unit 104 outputs an image to a display 31 connected to the control device 100 in accordance with an instruction from the CPU 101. As the display 31, any type of display such as a cathode ray tube (CRT) display, a liquid crystal display (LCD), a plasma display, or an organic electro-luminescence (OEL) display may be used.

The input signal processing unit 105 acquires an input signal from an input device 32 connected to the control device 100, and outputs the acquired input signal to the CPU 101. As the input device 32, a pointing device such as a mouse, a touch panel, a touch pad, or a trackball, a keyboard, a remote controller, a button switch, or the like may be used. Furthermore, a plurality of types of input devices may be connected to the control device 100.

The medium reader 106 is a reading device that reads a program or data recorded in a recording medium 33. As the recording medium 33, for example, a magnetic disk, an optical disc, a magneto-optical (MO) disk, a semiconductor memory, or the like may be used. The magnetic disk includes a flexible disk (FD) and an HDD. The optical disc includes a compact disc (CD) and a digital versatile disc (DVD).

The medium reader 106 copies, for example, a program or data read from the recording medium 33 to another recording medium such as the RAM 102 or the HDD 103. The read program is executed by the CPU 101, for example. Note that the recording medium 33 may be a portable recording medium, and is sometimes used for distribution of the program and data. Furthermore, the recording medium 33 and the HDD 103 are sometimes referred to as computer-readable recording media.

The NIC 107 is an interface that is connected to the network 30 and communicates with the nodes 200 to 700 and another computer through the network 30. The NIC 107 is connected to a communication device such as a switch or a router by a cable, for example.

The bus 108 is an internal bus of the control device 100. The CPU 101, the RAM 102, the HDD 103, the image signal processing unit 104, the input signal processing unit 105, the medium reader 106, and the NIC 107 are connected to the bus 108. A peripheral component interconnect express (PCIe) bus is used for the bus 108, for example.

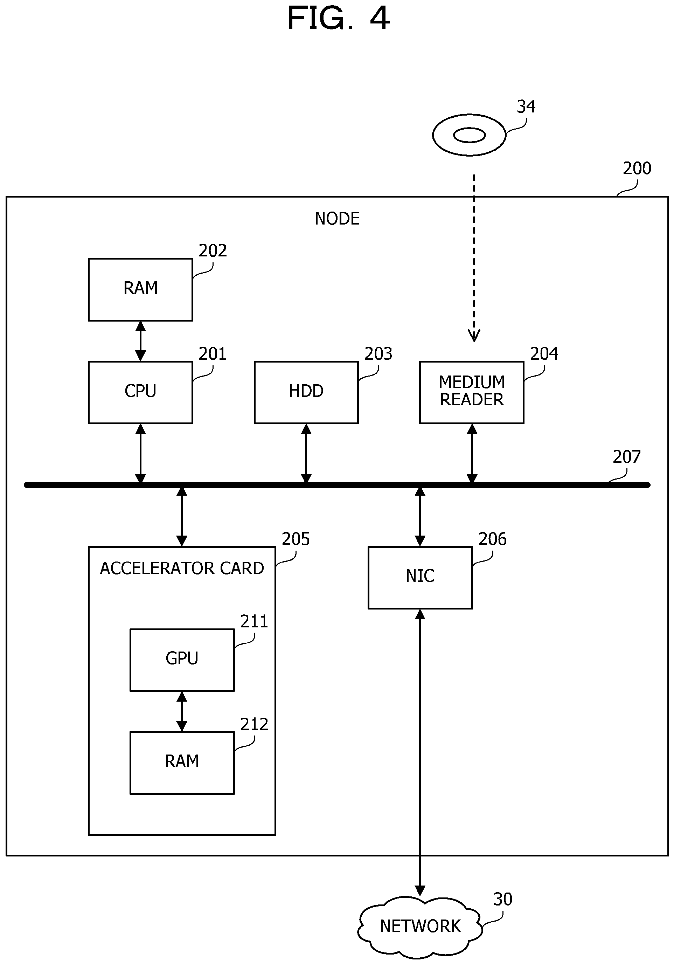

FIG. 4 is a diagram illustrating a hardware example of the node.

The node 200 includes a CPU 201, a RAM 202, an HDD 203, a medium reader 204, an accelerator card 205, a NIC 206, and a bus 207. The accelerator card 205 is an example of the search unit 13 of the first embodiment. However, the node 200 may be considered as an example of the search unit 13 of the first embodiment.

The CPU 201 is a processor that executes a program command. The CPU 201 loads at least a part of the program and data stored in the HDD 203 into the RAM 202, and executes the program. Note that the CPU 201 may include a plurality of processor cores. Furthermore, the node 200 may include a plurality of processors. The process described below may be executed in parallel using a plurality of processors or processor cores.

The RAM 202 is a volatile semiconductor memory that temporarily stores the program executed by the CPU 201 and the data used by the CPU 201 for operations. Note that the node 200 may include any type of memory other than the RAM, or may include a plurality of memories.

The HDD 203 is a nonvolatile storage device that stores software programs such as an OS, middleware, and application software, and data. Note that the node 200 may include another type of storage device such as a flash memory or an SSD, and may include a plurality of nonvolatile storage devices.

The medium reader 204 is a reading device that reads a program or data recorded in a recording medium 34. As the recording medium 34, for example, a similar recording medium to the recording medium 33 may be used.

The medium reader 204 copies, for example, a program or data read from the recording medium 34 to another recording medium such as the RAM 202 or the HDD 203. The read program is executed by the CPU 201, for example. Note that the recording medium 34 may be a portable recording medium, and is sometimes used for distribution of the program and data. Furthermore, the recording medium 34 and the HDD 203 are sometimes referred to as computer-readable recording media.

The accelerator card 205 is a hardware accelerator that searches for a solution to the combinatorial optimization problem represented in the Ising form. The accelerator card 205 includes a GPU 211 and a RAM 212. The GPU 211 achieves the solution search function in the accelerator card 205. The accelerator card 205 may include a plurality of GPUs. Furthermore, the solution search function may be achieved by another integrated circuit such as an FPGA or an ASIC. The RAM 212 holds $\{W_{ij}\}$ and $\{bi\}$ in expression (1) and the solution found by the GPU 211. As will be described later, the node 200 may include a plurality of accelerator cards.

The hardware accelerator that solves the problem in the Ising form, such as the accelerator card 205, is sometimes referred to as an Ising machine, a Boltzmann machine, an optimization device, or the like.

The NIC 206 is an interface that is connected to the network 30 and communicates with the control device 100 and another computer through the network 30. The NIC 206 is connected to a communication device such as a switch or a router by a cable, for example.

The bus 207 is an internal bus of the node 200. The CPU 201, the RAM 202, the HDD 203, the medium reader 204, the accelerator card 205, and the NIC 206 are connected to the bus 207. For example, PCIe is used for the bus 207.

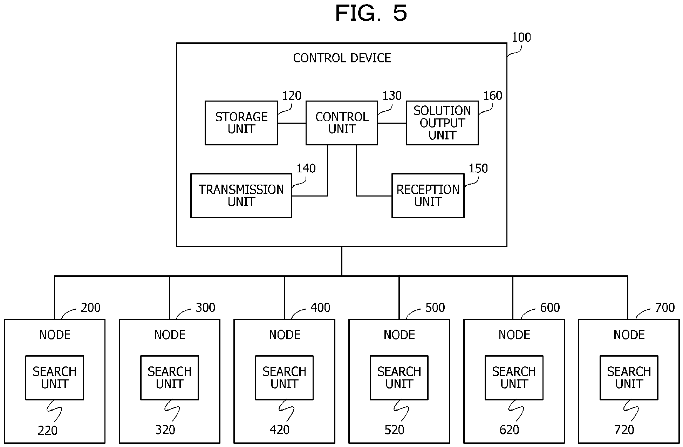

FIG. 5 is a diagram illustrating a functional example of the information processing system.

The control device 100 includes a storage unit 120, a control unit 130, a transmission unit 140, a reception unit 150, and a solution output unit 160. A storage area of the RAM 102 or the HDD 103 is used as the storage unit 120. The control unit 130, the transmission unit 140, the reception unit 150, and the solution output unit 160 are achieved by the CPU 101 executing a program stored in the RAM 102.

The nodes 200, 300, 400, 500, 600, and 700 include search units 220, 320, 420, 520, 620, and 720, respectively. The search units 220 to 720 are achieved by the accelerator cards included in the nodes 200 to 700, respectively. However, at least one of the search units 220, 320, 420, 520, 620, and 720 may be achieved by the CPU of the relevant node executing a program stored in the RAM of the relevant node.

The storage unit 120 stores data used for the process of the control unit 130. The data held by the storage unit 120 includes solution accuracy improvement rate data and a neighborhood depth table.

The solution accuracy improvement rate data holds a solution accuracy improvement rate calculated for the neighborhood depth. The solution accuracy improvement rate indicates the degree of enhancement with respect to a particular initial solution in the energy value of the solution obtained by a search at a relevant neighborhood depth with the particular initial solution as a starting point. The greater the solution accuracy improvement rate, the greater the degree of enhancement in the energy value with respect to the initial solution.

The neighborhood depth table holds a solution accuracy improvement evaluation value for each neighborhood depth based on the solution accuracy improvement rate data. The solution accuracy improvement evaluation value is obtained by normalizing the solution accuracy improvement rate and further transforming the normalized result into an integer.

Note that the solution accuracy improvement rate may be considered as an example of the "index indicating the degree of improvement in the solution accuracy" of the first embodiment. Alternatively, the solution accuracy improvement evaluation value may be considered as an example of the "index indicating the degree of improvement in the solution accuracy" of the first embodiment.

The control unit 130 transmits the initial solution and the neighborhood depth of the search to the search units 220 to 720 through the transmission unit 140. In the first stage, the control unit 130 sets each of the search units 220 to 720 with an initial neighborhood depth determined in advance. For example, the control unit 130 may randomly determine the initial neighborhood depth of each of the search units 220 to 720. Alternatively, for example, when it is empirically known that a sufficiently good solution is obtained in a shallow neighborhood (such as a change in one state variable) in the beginning, the control unit 130 may make a relatively shallow neighborhood easier to be selected in the first stage using a predetermined weighted probability, according to the problem.

The control unit 130 acquires, from each of the search units 220 to 720, the initial solution used for the search at the set neighborhood depth, the best solution obtained by the search, and the search time taken to obtain the best solution. The best solution is a solution having the minimum energy value among the solutions obtained by the search.

The control unit 130 calculates the solution accuracy improvement rates for the neighborhood depths set in the search units 220 to 720, and stores the calculated solution accuracy improvement rates in the storage unit 120. Assuming that the energy value of the initial solution acquired from a relevant search unit is denoted by E1, the energy value of the best solution is denoted by E2, and the search time is denoted by T, the solution accuracy improvement rate v is represented as v = (E1 - E2)/T.

Furthermore, the control unit 130 calculates the solution accuracy improvement index for each neighborhood depth, based on the solution accuracy improvement rate v calculated for the neighborhood depth of each of the search units 220 to 720, and registers the calculated solution accuracy improvement index in the neighborhood depth table. The control unit 130 determines a neighborhood depth to be set in each of the search units 220 to 720 based on the neighborhood depth table, and transmits the determined neighborhood depth to each of the search units 220 to 720 through the transmission unit 140. In addition, the control unit 130 generates an initial solution for the next search to transmit the generated initial solution to the search units 220 to 720 through the transmission unit 140, and causes the search units 220 to 720 to execute searches at the relevant neighborhood depths.

The control unit 130 repeatedly executes the above process for a predetermined number of times or a predetermined period of time, and when the predetermined number of times or the predetermined period of time ends, outputs the best solution, which is a solution having the minimum energy value, among the solutions acquired from the search units 220 to 720, to the solution output unit 160 as the final solution.

The transmission unit 140 transmits information on the neighborhood depths and the initial solution to be set in the search units 220 to 720, which have been acquired from the control unit 130, to the search units 220 to 720. Note that it may be said that the transmission of the information by the transmission unit 140 to the search units 220 to 720 is the transmission of the information to the nodes 200 to 700, respectively.

When the search by each of the search units 220 to 720 is completed, the reception unit 150 receives the initial solution of the search, the minimum solution obtained by the search, and the search time of the search from the relevant search unit, and supplies the received items to the control unit 130. Note that it may be said that the reception of the information from the search units 220 to 720 by the reception unit 150 is the reception of the information from the nodes 200 to 700, respectively.

The solution output unit 160 acquires a solution finally obtained by the searches in the search units 220 to 720 from the control unit 130, and outputs the acquired solution. The solution output unit 160, for example, displays the content obtained by converting the final solution into a format of the solution to the combinatorial optimization problem, on the display 31, or transmits information indicating the content to a client computer or the like through the network 30.

The search units 220 to 720 receive the initial solution and the neighborhood depths from the control device 100, and search for solutions using the received initial solution and the neighborhood depths. When the search at the relevant neighborhood depth is completed, each of the search units 220 to 720 transmits the initial solution, the best solution obtained by the search, and the search time to the control device 100.

Next, the "neighborhoods" in the searches by the search units 220 to 720 will be described.

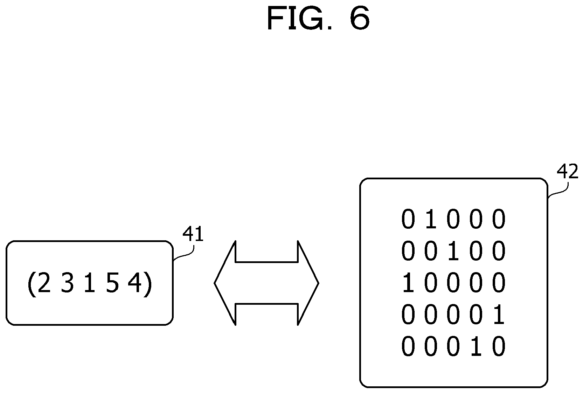

FIG. 6 is a diagram illustrating an example in which a solution is represented by a permutation of a plurality of elements.

Here, for example, a case where the solution is represented by a permutation of N elements, such as the traveling salesman problem, will be considered. In this case, the permutation and N * N bits, which are a matrix of state variables in which the sum of columns is 1 and the sum of rows is 1, may be considered in a one-to-one correspondence. The case of N = 5 will be illustrated.

A permutation 41 represents a matrix 42 by elements represented by the five numbers "1" to "5". For example, for a number j of an i-th element, counting from the left of the permutation 41, the element of an i-th row and a j-th column of the matrix 42 is 1, and the other elements of the matrix 42 are 0.

A permutation such as the permutation 41 may be used to explain the neighborhood. There is a plurality of types of neighborhoods.

The first example is the insertion neighborhood. In the insertion neighborhood, one element is inserted at another position.

For example, a permutation (1,2,5,3,4) is obtained by inserting 5 between 2 and 3 in the permutation (1,2,3,4,5).

The second example is the exchange neighborhood. In the exchange neighborhood, two elements are exchanged.

For example, a permutation (1,4,3,2,5) is obtained by exchanging 2 and 4 in the permutation (1,2,3,4,5).

The third example is the A-exchange neighborhood. In the $\lambda$-exchange neighborhood, $\lambda$ (< N) elements are replaced. Note that the above-mentioned exchange neighborhood is equivalent to the 2-exchange neighborhood.

For example, a permutation (1,5,2,4,3) is obtained by replacing 2, 3, 5 with 5, 2, 3 in the permutation (1,2,3,4,5).

The fourth example is the A-insertion neighborhood. In the $\lambda$-insertion neighborhood, consecutive $\lambda$ (< N) elements are inserted at other positions.

For example, a permutation (4,1,2,3,5) is obtained by inserting 1, 2, 3 between 4 and 5 in the permutation (1,2,3,4,5).

The fifth example is the λ-opt neighborhood.

Here, a pair of adjacent elements in a permutation (the order is ignored) is called a branch. A neighborhood made up of branches in which the number of different branches does not exceed λ is called the λ-opt neighborhood. Next, an example of the 2-opt neighborhood in the case of λ = 2 will be illustrated.

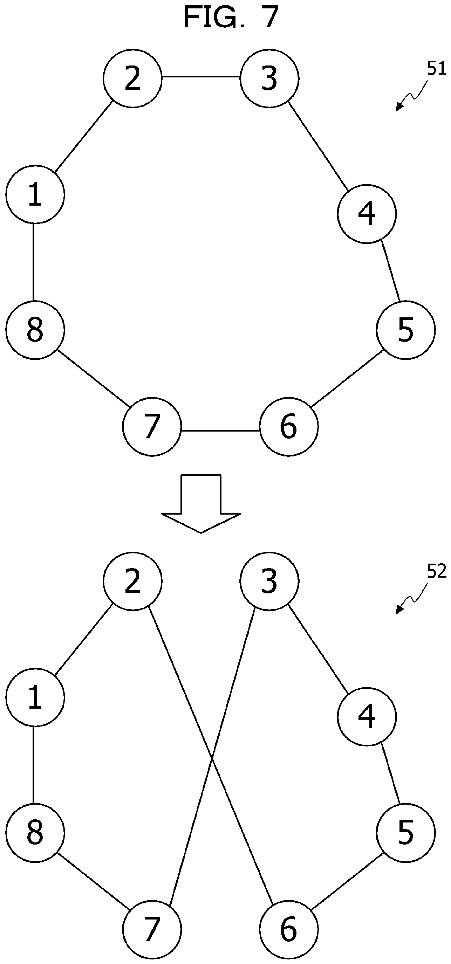

FIG. 7 is a diagram illustrating an example of the 2-opt neighborhood.

For example, a graph 51 represents how adjacent elements in a permutation (1,2,3,4,5,6,7,8) are linked by branches. A graph 52 represents how adjacent elements in a permutation (1,2,6,5,4,3,7,8) are linked by branches.

For example, in the permutation (1,2,6,5,4,3,7,8), only a branch that links (2,6) and a branch that links (3,7) are branches different from the branches of the permutation (1,2,3,4,5,6,7,8). Accordingly, the permutation (1,2,6,5,4,3,7,8) is located within the 2-opt neighborhood of the permutation (1,2,3,4,5,6,7,8).

The search units 220 to 720 may dynamically modify the neighborhood depth used for the search, using the above-described methods of the first to fifth examples, or the like. For example, a state in which one state variable, which is one bit, is inverted, or a state obtained by exchanging some bits with other bits is defined as a neighborhood in one state transition. This allows the search to continue in a promising area in terms of optimality. In a case where the time taken for the search is not taken into account, it is regarded better to deepen the neighborhood as the accuracy of the solution becomes higher.

For example, it is conceivable to combine at least two of the neighborhoods of the first to fifth examples described above to form one neighborhood. As the number of combined neighborhoods is expanded, the neighborhood becomes deeper, which means that the value of the neighborhood depth becomes greater.

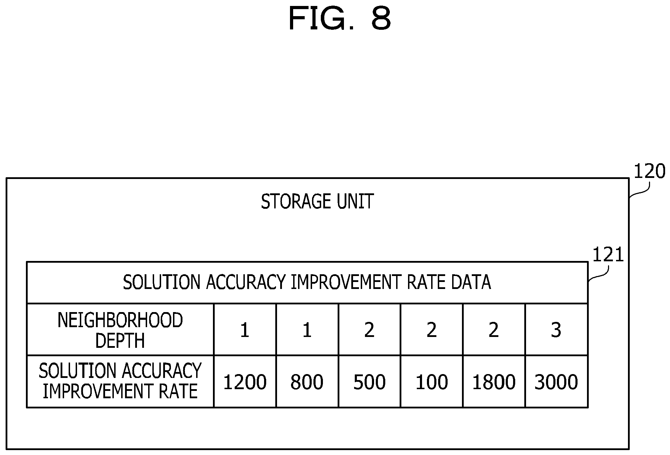

FIG. 8 is a diagram illustrating an example of the solution accuracy improvement rate data.

The solution accuracy improvement rate data 121 is stored in the storage unit 120. The solution accuracy improvement rate data 121 is data of the calculation result for the solution accuracy improvement rate calculated for the neighborhood depth of each of the search units 220 to 720.

In the example of the solution accuracy improvement rate data 121 in FIG. 8, among the six search units 220 to 720, the number of search units set with the neighborhood depth "1" is 2, the number of search units set with the neighborhood depth "2" is 3, and the number of search units set with the neighborhood depth "3" is 1.

For example, the solution accuracy improvement rate data 121 holds the data of the following solution accuracy improvement rates for each neighborhood depth.

The first is the solution accuracy improvement rate "1200" for the neighborhood depth "1".

The second is the solution accuracy improvement rate "800" for the neighborhood depth "1".

The third is the solution accuracy improvement rate "500" for the neighborhood depth "2".

The fourth is the solution accuracy improvement rate "100" for the neighborhood depth "2".

The fifth is the solution accuracy improvement rate "1800" for the neighborhood depth "2".

The sixth is the solution accuracy improvement rate "3000" for the neighborhood depth "3".

The control unit 130 calculates the solution accuracy improvement evaluation value based on the solution accuracy improvement rate data 121.

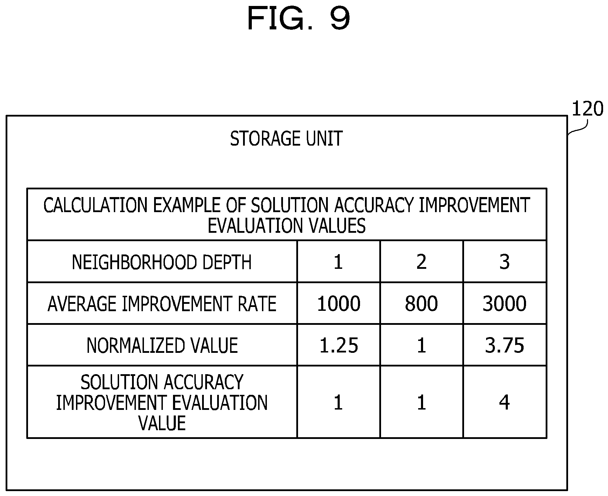

FIG. 9 is a diagram illustrating a calculation example of the solution accuracy improvement evaluation values.

The control unit 130 works out an average improvement rate, which is the average of the solution accuracy improvement rates for each neighborhood depth. In the solution accuracy improvement rate data 121 in FIG. 8, the average improvement rate of the neighborhood depth "1" is (1200 + 800)/2 = 1000. The average improvement rate of the neighborhood depth "2" is (500 + 100 + 1800)/3 = 800. The average improvement rate of the neighborhood depth "3" is 3000.

The control unit 130 normalizes the average improvement rates for each neighborhood depth. For example, the control unit 130 divides the average improvement rate of each neighborhood depth by the average improvement rate "800" of the neighborhood depth "2", which is the minimum value among the average improvement rates for each neighborhood depth, to thereby normalize the average improvement rate of each neighborhood depth with the minimum value as a reference. Then, the normalized value for the average improvement rate "1000" of the neighborhood depth "1" is 1.25. The normalized value for the average improvement rate "800" of the neighborhood depth "2" is 1. The normalized value for the average improvement rate "3000" of the neighborhood depth "3" is 3.75.

The control unit 130 further transforms the normalized values for each neighborhood depth into integers by rounding values after the decimal point, thereby working out the solution accuracy improvement evaluation values. For example, the solution accuracy improvement evaluation value of the neighborhood depth "1" is 1. The solution accuracy improvement evaluation value of the neighborhood depth "2" is 1. The solution accuracy improvement evaluation value of the neighborhood depth "3" is 4.

The average improvement rates, the normalized values, and the solution accuracy improvement evaluation values worked out in the above calculation are held in the storage unit 120.

The control unit 130 registers the calculation results of the solution accuracy improvement evaluation values in the neighborhood depth table.

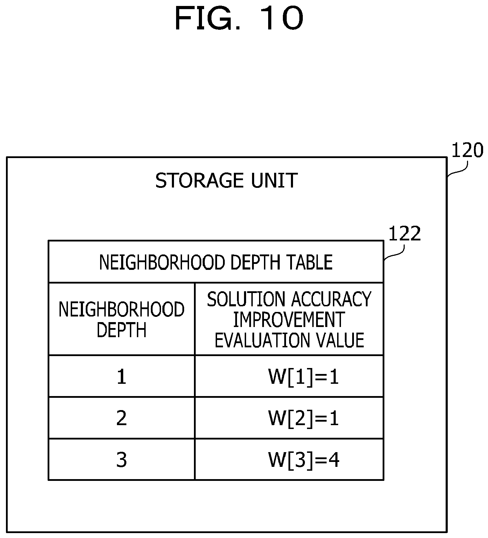

FIG. 10 is a diagram illustrating an example of the neighborhood depth table.

A neighborhood depth table 122 is stored in the storage unit 120. The neighborhood depth table 122 includes items of the neighborhood depth and the solution accuracy improvement evaluation value. The neighborhood depth is registered in the item of the neighborhood depth. The solution accuracy improvement evaluation value is registered in the item of the solution accuracy improvement evaluation value.

For example, in the neighborhood depth table 122, the solution accuracy improvement evaluation value "W[1] = 1" is registered for the neighborhood depth "1". Here, the variable W[d] (d is an integer equal to or greater than one) represents the solution accuracy improvement evaluation value of the neighborhood depth "d".

Furthermore, the solution accuracy improvement evaluation value "W[2] = 1" for the neighborhood depth "2" and the solution accuracy improvement evaluation value "W[3] = 4" for the neighborhood depth "3" are also registered in the neighborhood depth table 122.

Next, a processing procedure of the information processing system 2 will be described. First, the control device 100 transmits data of a problem in the Ising form and various kinds of information used for the search (for example, a temperature parameter used by the search unit of each node to execute the SA method or the replica exchange method) to the search units 220 to 720. Then, the control device 100 executes the following procedure.

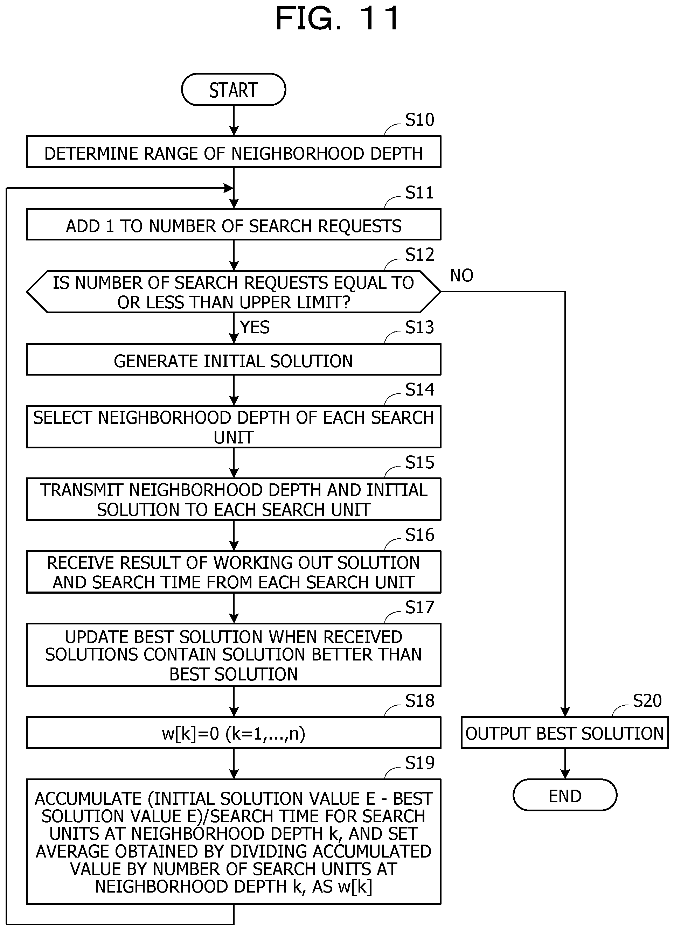

FIG. 11 is a flowchart illustrating a processing example of the control unit.

(S10) The control unit 130 determines the range of the neighborhood depth. The range of the neighborhood depth is prescribed by the minimum and maximum values of the neighborhood depth used for the search. For example, the range of the neighborhood depth is determined based on knowledge data obtained from the past actual search results for the same type of problem or the user's designation of the range of the neighborhood depth. The control unit 130 initializes the number of search requests to zero.

(S11) The control unit 130 adds 1 to the number of search requests.

(S12) The control unit 130 verifies whether or not the number of search requests is equal to or less than an upper limit. When the number of search requests is equal to or less than the upper limit, the control unit 130 advances the process to step S13. When the number of search requests is greater than the upper limit, the control unit 130 advances the process to step S20. Note that the upper limit of the number of search requests is preset by the user.

(S13) The control unit 130 generates an initial solution. The initial solution at the first time, which is the initial solution when the number of search requests is 1, may be given in advance, or may be generated by the control unit 130 by any method. Furthermore, for example, the initial solution when the number of search requests is 2 or more is generated by the control unit 130 based on the solutions obtained in the previous search by the search units 220 to 720. For example, the control unit 130 may generate the initial solution based on the best solution among the previously obtained solutions. The control unit 130 may generate the initial solution by modifying some state variables of the best solution based on a predetermined rule. The control unit 130 may employ the same initial solution for each of the search units 220 to 720, or may employ different initial solutions.

(S14) The control unit 130 selects the neighborhood depth of each search unit. As described earlier, when the number of search requests is 1, the control unit 130 may randomly determine the initial neighborhood depth of each of the search units 220 to 720, or may make a specific neighborhood easier to be selected using a predetermined weighted probability. When the number of search requests is 2 or more, the control unit 130 selects the neighborhood depth of each of the search units 220 to 720 based on the neighborhood depth table 122. For example, the control unit 130 probabilistically selects the neighborhood depth of each of the search units 220 to 720 based on the random number such that the number of selected neighborhood depths approaches each ratio of the solution accuracy improvement evaluation value held in the neighborhood depth table 122. In the example of the neighborhood depth table 122 in FIG. 10, the probability or proportion that the neighborhood depth "1" is selected for a particular search unit is 1/6. Furthermore, the probability that the neighborhood depth "2" is selected for a particular search unit is 1/6. Moreover, the probability that the neighborhood depth "3" is selected for a particular search unit is 4/6 = 2/3.

(S15) The control unit 130 transmits the neighborhood depth and the initial solution to be set in each of the search units 220 to 720 to each search unit through the transmission unit 140.

(S16) The control unit 130 receives the result of working out a solution and the search time in each of the search units 220 to 720 from the search units 220 to 720 through the reception unit 150. The result of working out a solution includes the initial solution, the best solution obtained in the search at this time, and the search time.

(S17) When the received solutions, which are the solutions received from the search units 220 to 720, contain the best solution among the solutions obtained so far that is better than the best solution held in the storage unit 120, the control unit 130 updates the best solution held in the storage unit 120.

(S18) The control unit 130 sets the solution accuracy improvement evaluation value w[k] = 0 (k = 1, ..., n).

(S19) The control unit 130 accumulates (initial solution value E - best solution value E)/search time for search units at a neighborhood depth k, and sets an average obtained by dividing the accumulated value by the number of search units at the neighborhood depth k, as w[k]. Note that the "initial solution value E" indicates the energy value of the initial solution of a relevant search. Furthermore, the "best solution value E" indicates the energy value of the best solution obtained in a relevant search. As described above, the control unit 130 may normalize w[k] or may transform w[k] to an integer by, for example, rounding down or rounding up values after the decimal point when w[k] is not an integer. Then, the control unit 130 advances the process to step S11.

(S20) The control unit 130 supplies the solution output unit 160 with the best solution held in the storage unit 120. The solution output unit 160 outputs the best solution acquired from the control unit 130. For example, the solution output unit 160 may display the content obtained by converting the final solution into a format of the solution to the combinatorial optimization problem, on the display 31, or may transmit information indicating the content to a client computer or the like through the network 30. Then, the process of the control unit 130 ends.

Next, a processing procedure of the search units 220 to 720 will be described. In the following, the search unit 220 is mainly illustrated, but the search units 320 to 720 also execute a procedure similar to the procedure of the search unit 220.

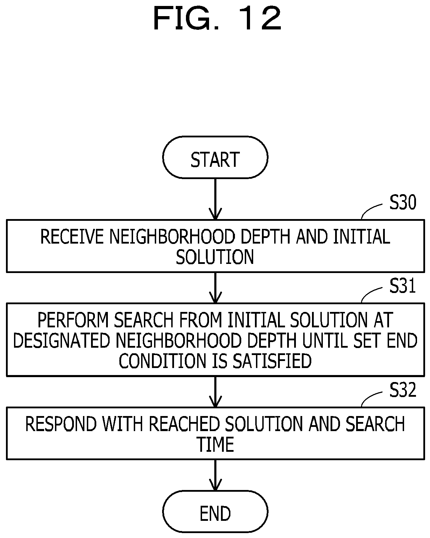

FIG. 12 is a flowchart illustrating a processing example of the search unit.

(S30) The search unit 220 receives the neighborhood depth and the initial solution from the control device 100.

(S31) The search unit 220 performs a search from the received initial solution at the designated neighborhood depth until a set end condition is satisfied. In step S31, the time taken for the search from the start of the search to the satisfaction of the end condition is employed as the search time.

(S32) The search unit 220 responds to the control device 100 with the solution reached by the search in step S31, which is the best solution in the search, and the search time. Then, the process of the search unit 220 ends.

Here, the characteristics of the search time in step S31 depend on an algorithm implemented in each of the search units 220 to 720. The examples as follows are conceivable for this algorithm.

The first example is a case where a relevant search unit ends the search after performing a certain number of state transitions. In the first example, the deeper the neighborhood, the longer time the search takes, but the accuracy of the solution also improves. The correlation between the depth of the neighborhood and the search time is almost unchanged.

The second example is a case where a relevant search unit performs a search for a certain time to end the search. In the second example, since the search time is consistent, the accuracy of the solution depends on "which neighborhood depth is optimum". When the search times by the search units 220 to 720 regularly have a consistent value, the control unit 130 does not have to acquire the search times from the search units 220 to 720. In that case, the control unit 130 may set T to the consistent value or T = 1 in the expression for working out the solution accuracy improvement rate.

The third example is a case where a relevant search unit ends the search when the enhancement of the solution does not occur for a certain period of time or a certain number of times. In the third example, the deeper the neighborhood, the longer time the search takes, but the accuracy of the solution may also improve. However, there is no fixed correlation as in the first example.

In any of the above first to third examples, for example, by taking the ratio of the search time and the enhancement amount of the energy value of the solution, a neighborhood depth at which good search performance is obtained may be estimated.

Note that, although an example in which one search unit is provided in one node is indicated, a plurality of search units may be provided in one node. Next, another hardware example of the node 200 will be described.

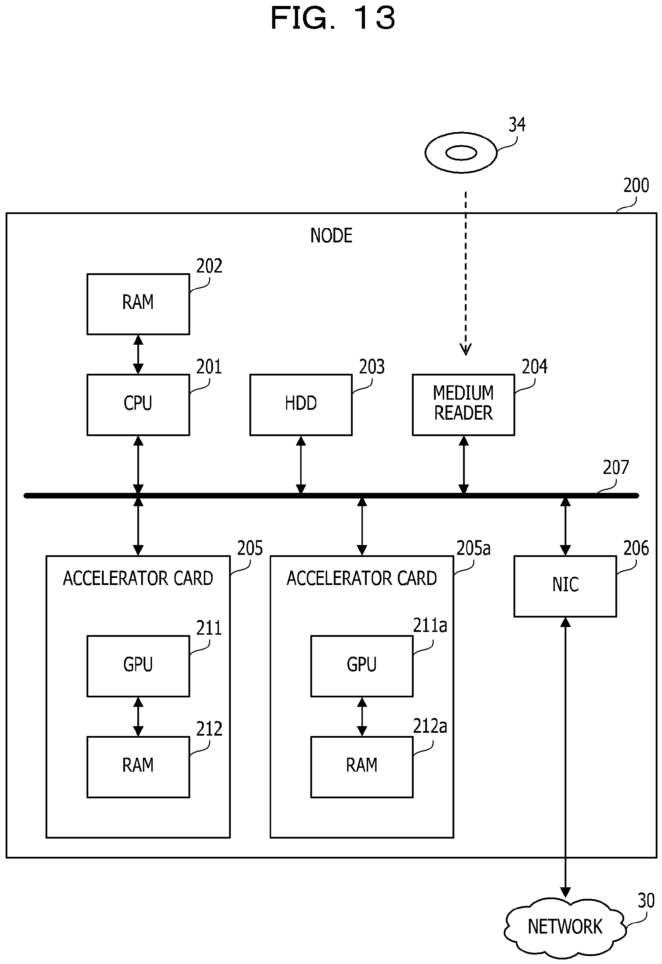

FIG. 13 is a diagram illustrating another hardware example of the node.

The node 200 may include an accelerator card 205a in addition to the hardware illustrated in FIG. 4. The accelerator card 205a is connected to the bus 207.

The accelerator card 205a is a hardware accelerator that searches for a solution to the combinatorial optimization problem represented in the Ising form. The accelerator card 205a includes a GPU 211a and a RAM 212a. The GPU 211a achieves the solution search function in the accelerator card 205a. The accelerator card 205a may include a plurality of GPUs. Furthermore, the solution search function may be achieved by another integrated circuit such as an FPGA or an ASIC. The RAM 212a holds $\{W_{ij}\}$ and $\{bi\}$ in expression (1) and the solution found by the GPU 211a.

The accelerator card 205a functions as a search unit in the node 200. In this manner, a plurality of search units including the search unit 220 may be achieved in the node 200 by mounting a plurality of accelerator cards on the node 200. At least one of the plurality of search units in the node 200 may perform a search using a neighborhood depth different from the neighborhood depths of the other search units among the plurality of search units in the node 200. Furthermore, at least one of the plurality of search units in the node 200 may be achieved by the CPU 201 executing a program stored in the RAM 202.

The nodes 300 to 700 may also achieve a plurality of search units by using hardware similar to the hardware of the node 200.

In addition, the node 200 may have the function of the control device 100. For example, the CPU 201 may exhibit the functions of the control unit 130, the transmission unit 140, the reception unit 150, and the solution output unit 160 by executing a program stored in the RAM 202. For example, by providing a plurality of search units in the node 200, the functions of the information processing system 1 of the first embodiment and the information processing system 2 of the second embodiment may also be achieved only by the node 200. This means that a single information processing device such as the node 200 mounted with the accelerator cards 205 and 205a may be an example of the information processing system 1 of the first embodiment. In that case, the CPU 201 may be considered as an example of the processing unit 12 of the first embodiment. Furthermore, the RAM 202 or the HDD 203 may be considered as an example of the storage unit 11 of the first embodiment.

In this manner, the information processing system 2 searches for the optimum solution in parallel by the accelerators in the nodes 200 to 700. In the information processing system 2, the performance of working out a solution may be improved by adjusting the depth of the neighborhood, which is the neighborhood depth, based on the improvement rate of the solution accuracy in each of the nodes 200 to 700 and causing the nodes 200 to 700 to operate collaboratively.

Incidentally, it is conceivable to search for a solution by repeatedly trying state transitions only at a neighborhood depth of 1, but it is difficult in some cases to reach a global optimum solution.

As an example, the problem represented by expression (3) will be considered.

$$\min y(\boldsymbol{x}) = \boldsymbol{x}^t \boldsymbol{Q} \boldsymbol{x} \quad with$$

$$\boldsymbol{Q} = \begin{bmatrix} -100 & 0 & 0 \\ 0 & 1000 & -10000 \\ 0 & -10000 & 500 \end{bmatrix} \tag{3}$$

The problem represented by expression (3) is a problem of working out a state x that minimizes y(x). The state x is represented by three state variables $(x_1, x_2, x_3)$. Assuming the initial solution $x = (x_1, x_2, x_3) = (0,0,0)$, in the state transition at a neighborhood depth of 1 (which is 1-bit flip), three candidates for the next state and three values of y(x) represented by expression (4) are given.

$$\begin{cases} y(1,0,0) = -100 \\ y(0,1,0) = 1000 \\ y(0,0,1) = 500 \end{cases} \tag{4}$$

Among the three candidates in expression (4), x = (1,0,0) has the smallest and best value of y(x). Therefore, for example, the initial solution transitions to the state x = (1,0,0). Except for returning to the state x = (0,0,0) in the next 1-bit flip, two candidates for the next state and two values of y(x) in expression (5) are given.

$$\begin{cases} y(1,1,0) = 900 \\ y(1,0,1) = 900 \end{cases} \tag{5}$$

Comparing expression (5) with y(1,0,0) = -100, y(1,0,0) is the smallest. Accordingly, the state x = (1,0,0) is employed as a local optimum solution. However, in the case of this problem, x = (0,1,1) obtained by flipping the state variables $x_2$ and $x_3$ at the same time with respect to the initial solution is given as a global optimum solution. The value y(0,1,1) is represented by expression (6).

$$y(0,1,1) = 500 + 1000 - 2 \times 10000 = -18500 \tag{6}$$

Meanwhile, as indicated by expression (4), x = (0,1,0) and x = (0,0,1) have y(x) greater than the case of x = (1,0,0), and it is thus difficult for the initial solution to transition to x = (0,1,0) or x = (0,0,1). Therefore, in the search by the state transition of only 1-bit flip, it is difficult to reach the global optimum solution x = (0,1,1) located ahead of x = (0,1,0) and x = (0,0,1).

Thus, it is conceivable to make the number of state variables to be changed per one state transition in a search, which is the neighborhood depth, variable and making the neighborhood depth greater stepwise. However, in this case, the accuracy of the obtained solution may improve, but the time taken for the search increases. For example, the description is as follows.

As an example, the knapsack problem will be considered. The knapsack problem is a problem of working out a combination that maximizes the total value among combinations of items to be put into a knapsack having a capacity upper limit C with respect to a capacity such as the weight or volume of the contents. There are N items (N is an integer equal to or greater than two). The capacity of an i-th (i is an integer equal to or greater than one) item i is assumed as $w_i$, and the value of the item i is assumed as $v_i$. The expression $w_i < C$ is established for any i.

The energy function of the knapsack problem represents the sum of the values of the items in the knapsack, and is formulated in the quadratic form of the state variable $x_i$ using $w_i$, $v_i$, and C. The state variable $x_i$ represents "1" for putting the item i in the knapsack and "0" for not putting the item i in the knapsack, for example.

The following method may be considered as a search strategy for the knapsack problem.

In the first stage, effective items with high values and capacities are packed into the knapsack one by one. In this case, the number of state transition trials is at most N. The neighborhood depth in the first stage is "1". This means that the state change of the Hamming distance "1" is generated by the state transition. When the sum of the capacities of the contents of the knapsack approaches the capacity upper limit C and unselected items are no longer allowed to be added, the second stage is initiated.

In the second stage, one item that has been packed in the knapsack is removed and another item is added to the knapsack. When K items are packed in the knapsack, the number of state transition trials is about K * (N - K). The neighborhood depth in the second stage is "2". This means that the state change of the Hamming distance "2" is generated by the state transition. When the value is no longer enhanced in the second stage, the third stage is initiated.

In the third stage, two items that have been packed in the knapsack are removed and another item is added to the knapsack. When K items are packed in the knapsack, the number of state transition trials is about K(K - 1) * (N - K)(N - K - 1). The neighborhood depth in the third stage is "4". This means that the state change of the Hamming distance "4" is generated by the state transition. When the value is no longer enhanced in the third stage, the next stage is further initiated.

In this manner, when the neighborhood depth is made variable and the neighborhood depth is made greater stepwise, the accuracy of the obtained solution may improve, but the number of patterns employed for the search is expanded and the time taken for the search increases. Meanwhile, it is not easy to determine the neighborhood depth appropriately according to the problem, the search situation, and the like.

In contrast to this, the control unit 130 calculates the solution accuracy improvement index for each neighborhood depth, on the basis of the solutions obtained as results of searches at different neighborhood depths. Then, the control unit 130 verifies the contribution to the solution accuracy for each neighborhood depth according to the relevant problem, the current search situation, and the like, based on the solution accuracy improvement index for each neighborhood depth, and preferentially selects a neighborhood depth that is estimated to significantly contribute to the solution accuracy improvement. The control unit 130 may cause the search units 220 to 720 to efficiently execute the search by causing the search units 220 to 720 to execute searches using the selected neighborhood depths. As a result, the possibility that the search units 220 to 720 reach better solutions is raised, and the overall performance of working out a solution by the search units 220 to 720 is improved. For example, it is possible to raise the possibility of reaching the optimum solution or a solution whose energy value is smaller than a target value prescribed in advance, within a predetermined time.

The information processing system 2 described above executes, for example, the following process.

Each of the search units 220 to 720 searches for a solution to a problem represented by an energy function containing a plurality of state variables. Each of the search units 220 to 720 is set with a neighborhood depth indicating the number of state variables to be changed per one state transition in the search.

The control unit 130 acquires a first value of the energy function for an initial solution of a search at a first neighborhood depth and a second value of the energy function for a first solution obtained by the search at the first neighborhood depth. The control unit 130 calculates a first index indicating the degree of improvement in a solution accuracy by the first neighborhood depth, based on the first value and the second value.

The control unit 130 acquires a third value of the energy function for an initial solution of a search at a second neighborhood depth and a fourth value of the energy function for a second solution obtained by the search at the second neighborhood depth. The control unit 130 calculates a second index indicating the degree of improvement in a solution accuracy by the second neighborhood depth, based on the third value and the fourth value.

The control unit 130 outputs neighborhood depths to be set in the search units 220 to 720, based on the first index and the second index.

By using the neighborhood depths output in this manner for searches by the search units 220 to 720, the search may be executed efficiently. For example, setting an appropriate neighborhood depth according to the problem may be enabled. Alternatively, when, for example, the best solutions obtained by the search units 220 to 720 in the search period of time at this time is used to generate an initial solution of the next search period of time for the search units 220 to 720, dynamically adjusting the appropriate neighborhood depth according to the search situation may be enabled.

Here, in the process of outputting the neighborhood depths to be set in the search units 220 to 720 based on the above-described first index and second index, as illustrated in the second embodiment, three or more indexes including the first index and the second index, which have been worked out for three or more neighborhood depths, may be used.

The control unit 130 calculates the first index based on a difference between the first value and the second value. Consequently, the first index indicating the degree of improvement in the solution accuracy with respect to the first neighborhood depth may be appropriately evaluated with respect to an energy difference between the initial solution and the first solution. For example, it may be evaluated that the greater the energy difference, which means that the greater the enhancement range of the energy value, the higher the degree of improvement in the solution accuracy.

The control unit 130 may further acquire the time taken for the search at the first neighborhood depth, which is the search time, and calculate the first index based on the first value, the second value, and the search time. Consequently, when the search times in the search units 220 to 720 are different, the first index may be appropriately evaluated by taking the search time into account.

For example, the control unit 130 calculates the first index based on a fifth value obtained by dividing the difference between the first value and the second value by the search time. Consequently, the first index indicating the degree of improvement in the solution accuracy with respect to the first neighborhood depth may be appropriately evaluated with respect to an energy difference between the initial solution and the first solution, and the search time. This means that the greater the energy difference and the shorter the search time, the higher the degree of improvement in the solution accuracy. Note that the control unit 130 may employ the fifth value as it is as the first index.

The control unit 130 calculates the first index based on an average of indexes each indicating the degree of improvement in the solution accuracy, which have been calculated for each of a plurality of solutions that include the first solution and have been obtained by a plurality of searches at the first neighborhood depth. Consequently, the accuracy of evaluation of the first index indicating the degree of improvement in the solution accuracy with respect to the first neighborhood depth may be improved. The control unit 130 may employ the average as the first index, or as illustrated, may employ a normalized value obtained by normalizing the average with respect to a plurality of neighborhood depths or a value obtained by further transforming the normalized value into an integer, as the first index.

Furthermore, the control unit 130 may calculate the first index from results of a plurality of searches performed from a common initial solution at the first neighborhood depth. Consequently, the accuracy of evaluation of the first index may be improved. However, at least two of initial solutions for each of the plurality of searches may differ.

Note that the control unit 130 may also calculate the second index by a similar method to the method for the first index.

The control unit 130 preferentially selects a neighborhood depth with a great degree of improvement in the solution accuracy, based on the first index and the second index, and outputs the selected neighborhood depth. Consequently, a neighborhood depth that is deemed to significantly contribute to the improvement in the solution accuracy may be appropriately output. For example, the proportion of search units set with a neighborhood depth that is deemed to significantly contribute to the improvement in the solution accuracy may be made greater among the search units 220 to 720.

At least two search units among the search units 220 to 720 execute a search at the first neighborhood depth and a search at the second neighborhood depth in parallel. The search may be performed more efficiently by executing searches in parallel by two or more search units.

The control unit 130 selects a neighborhood depth to be set in each of the plurality of search units, based on the ratio of the indexes each indicating the degree of improvement in the solution accuracy, which have been calculated for each of a plurality of neighborhood depths including the first neighborhood depth and the second neighborhood depth. Consequently, a neighborhood depth that is deemed to significantly contribute to the improvement in the solution accuracy may be appropriately output. For example, the proportion of search units set with a neighborhood depth that is deemed to significantly contribute to the improvement in the solution accuracy may be made greater among the search units 220 to 720.

The control unit 130 calculates the first index and the second index with respect to a common initial solution. Consequently, the index indicating the degree of improvement in the solution accuracy may be calculated for a set of the neighborhood depth and the initial solution, and the accuracy of evaluation of the index may be improved. Therefore, for example, a more appropriate neighborhood depth may be set for the search units 220 to 720 according to the problem, the search situation, and the like. As a result, the search may be performed more efficiently. However, the first index and the second index may be calculated with respect to different initial solutions.

When setting of the neighborhood depths in the search units 220 to 720 and searches by the search units 220 to 720 are repeated a predetermined number of times or for a predetermined period of time, the control unit 130 outputs a solution with the minimum value of the energy function, among solutions obtained from the search units 220 to 720. Consequently, the solution to the combinatorial optimization problem may be appropriately acquired.

Note that the information processing according to the first embodiment may be achieved by causing the processing unit 12 to execute the program. Furthermore, the information processing according to the second embodiment may be achieved by causing the CPU 101 or the CPU 201 to execute the program. The program may be recorded in the computer-readable recording media 33 and 34.

For example, the program may be distributed by distributing the recording media 33 and 34 in which the program is recorded. Alternatively, the program may be stored in another computer and distributed via a network. For example, a computer may store (install) the program, which is recorded in the recording medium 33 or 34 or received from another computer, in a storage device such as the RAM 102 or the HDD 103, read the program from the storage device, and execute the program.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

**Claims**

1. An information processing system comprising:

   a search circuit configured to

   in regard to a problem represented by an energy function that contains a plurality of state variables, obtain a neighborhood depth that indicates a number of the state variables to be changed per one state transition in a search for a solution to the problem, and
   execute the search for the solution to the problem by using the obtained neighborhood depth; and

   a processing circuit configured to

   acquire a first value of the energy function for an initial solution of a search at a first neighborhood depth and a second value of the energy function for a first solution obtained by the search at the first neighborhood depth,
   calculate a first index that indicates a degree of improvement in a solution accuracy by the first neighborhood depth based on the first value and the second value,
   acquire a third value of the energy function for an initial solution of a search at a second neighborhood depth and a fourth value of the energy function for a second solution obtained by the search at the second neighborhood depth,
   calculate a second index that indicates a degree of the improvement in the solution accuracy by the second neighborhood depth based on the third value and the fourth value, and
   output the neighborhood depth to be set in the search circuit based on the first index and the second index.

2. The information processing system according to claim 1, wherein the processing circuit calculates the first index based on a difference between the first value and the second value.

3. The information processing system according to claim 1, wherein the processing circuit further acquires a time taken for the search at the first neighborhood depth, and calculates the first index based on the first value, the second value, and the time.

4. The information processing system according to claim 3, wherein the processing circuit calculates the first index based on a fifth value obtained by dividing the difference between the first value and the second value by the time.

5. The information processing system according to claim 1, wherein the processing circuit calculates the first index based on an average of indexes that each indicate a degree of the improvement in the solution accuracy, the indexes having been calculated for each of a plurality of solutions that include the first solution and have been obtained by a plurality of searches at the first neighborhood depth.

6. The information processing system according to claim 5, wherein the plurality of searches at the first neighborhood depth is performed using the initial solution that is common.

7. The information processing system according to claim 1, wherein the processing circuit preferentially selects the neighborhood depth with a great degree of the improvement in the solution accuracy, based on the first index and the second index, and outputs the selected neighborhood depth.

8. The information processing system according to claim 1, comprising
a plurality of search circuits that include the search circuit, wherein
at least two search circuits among the plurality of search circuits execute the search at the first neighborhood depth and the search at the second neighborhood depth in parallel.

9. The information processing system according to claim 8, wherein the processing circuit selects the neighborhood depth to be set in each of the plurality of search units, based on a ratio of indexes that each indicate a degree of the improvement in the solution accuracy, the indexes having been calculated for each of a plurality of neighborhood depths that include the first neighborhood depth and the second neighborhood depth.

10. The information processing system according to claim 1, wherein the processing unit calculates the first index and the second index with respect to the initial solution that is common.

11. The information processing system according to claim 1, wherein, when setting of the neighborhood depth in the search unit and a search by the search circuit are repeated a predetermined number of times or for a predetermined period of time, the processing circuit outputs a solution with a minimum value of the energy function, among solutions obtained from the search circuit.

12. An information processing method comprising:

causing a search circuit to, in regard to a problem represented by an energy function that contains a plurality of state variables, obtain a neighborhood depth that indicates a number of the state variables to be changed per one state transition in a search for a solution to the problem;
causing the search circuit to execute the search for the solution to the problem by using the obtained neighborhood depth;
acquiring a first value of the energy function for an initial solution of a search at a first neighborhood depth and a second value of the energy function for a first solution obtained by the search at the first neighborhood depth;
calculating a first index that indicates a degree of improvement in a solution accuracy by the first neighborhood depth based on the first value and the second value;
acquiring a third value of the energy function for an initial solution of a search at a second neighborhood depth and a fourth value of the energy function for a second solution obtained by the search at the second neighborhood depth;
calculating a second index that indicates a degree of the improvement in the solution accuracy by the second neighborhood depth based on the third value and the fourth value; and
outputting the neighborhood depth to be set in the search circuit based on the first index and the second index.

13. A computer program comprising instructions which, when the program is executed by a computer, cause the computer to perform processing, the processing comprising:

causing a search circuit to, in regard to a problem represented by an energy function that contains a plurality of state variables, obtain a neighborhood depth that indicates a number of the state variables to be changed per one state transition in a search for a solution to the problem;
causing the search circuit to execute the search for the solution to the problem by using the obtained neighborhood depth;
acquiring a first value of the energy function for an initial solution of a search at a first neighborhood depth and a second value of the energy function for a first solution obtained by the search at the first neighborhood depth;
calculating a first index that indicates a degree of improvement in a solution accuracy by the first neighborhood depth based on the first value and the second value;
acquiring a third value of the energy function for an initial solution of a search at a second neighborhood depth and a fourth value of the energy function for a second solution obtained by the search at the second neighborhood depth;
calculating a second index that indicates a degree of the improvement in the solution accuracy by the second neighborhood depth based on the third value and the fourth value; and

outputting the neighborhood depth to be set in the search circuit based on the first index and the second index.

# FIG. 1

| TABLE | |
|---|---|
| NEIGHBORHOOD DEPTH | SOLUTION ACCURACY IMPROVEMENT INDEX |
| d1 | 1 |
| d2 | 2 |

11a

INFORMATION PROCESSING SYSTEM

1

STORAGE UNIT

11

PROCESSING UNIT

12

NEIGHBORHOOD DEPTH d2

SEARCH UNIT

13

# FIG. 2

# FIG. 3

CONTROL DEVICE — 100

RAM — 102

CPU — 101

HDD — 103

— 108

IMAGE SIGNAL PROCESSING UNIT — 104

INPUT SIGNAL PROCESSING UNIT — 105

MEDIUM READER — 106

NIC — 107

31

32

33

NETWORK — 30

# FIG. 4

# FIG. 5

CONTROL DEVICE 100

STORAGE UNIT 120

CONTROL UNIT 130

SOLUTION OUTPUT UNIT 160

TRANSMISSION UNIT 140

RECEPTION UNIT 150

NODE 200
SEARCH UNIT 220

NODE 300
SEARCH UNIT 320

NODE 400
SEARCH UNIT 420

NODE 500
SEARCH UNIT 520

NODE 600
SEARCH UNIT 620

NODE 700
SEARCH UNIT 720

# FIG. 6

(2 3 1 5 4)    41

⟺

```
0 1 0 0 0
0 0 1 0 0
1 0 0 0 0
0 0 0 0 1
0 0 0 1 0
```
42

# FIG. 7

# FIG. 8

| STORAGE UNIT | | | | | | | 120 |
|---|---|---|---|---|---|---|---|

| SOLUTION ACCURACY IMPROVEMENT RATE DATA | | | | | | | 121 |
|---|---|---|---|---|---|---|---|
| NEIGHBORHOOD DEPTH | 1 | 1 | 2 | 2 | 2 | 3 | |
| SOLUTION ACCURACY IMPROVEMENT RATE | 1200 | 800 | 500 | 100 | 1800 | 3000 | |

# FIG. 9

120

| STORAGE UNIT | | | |
|---|---|---|---|
| CALCULATION EXAMPLE OF SOLUTION ACCURACY IMPROVEMENT EVALUATION VALUES | | | |
| NEIGHBORHOOD DEPTH | 1 | 2 | 3 |
| AVERAGE IMPROVEMENT RATE | 1000 | 800 | 3000 |
| NORMALIZED VALUE | 1.25 | 1 | 3.75 |
| SOLUTION ACCURACY IMPROVEMENT EVALUATION VALUE | 1 | 1 | 4 |

# FIG. 10

STORAGE UNIT  120

NEIGHBORHOOD DEPTH TABLE  122

| NEIGHBORHOOD DEPTH | SOLUTION ACCURACY IMPROVEMENT EVALUATION VALUE |
|---|---|
| 1 | W[1]=1 |
| 2 | W[2]=1 |
| 3 | W[3]=4 |

# FIG. 11

```
                          START

                                                    S10
        DETERMINE RANGE OF NEIGHBORHOOD DEPTH

                                                    S11
          ADD 1 TO NUMBER OF SEARCH REQUESTS

                                                    S12
         IS NUMBER OF SEARCH REQUESTS EQUAL TO          NO
              OR LESS THAN UPPER LIMIT?

                         YES                        S13
              GENERATE INITIAL SOLUTION

                                                    S14
        SELECT NEIGHBORHOOD DEPTH OF EACH SEARCH
                         UNIT

                                                    S15
        TRANSMIT NEIGHBORHOOD DEPTH AND INITIAL
             SOLUTION TO EACH SEARCH UNIT

                                                    S16
        RECEIVE RESULT OF WORKING OUT SOLUTION
        AND SEARCH TIME FROM EACH SEARCH UNIT

                                                    S17
        UPDATE BEST SOLUTION WHEN RECEIVED
       SOLUTIONS CONTAIN SOLUTION BETTER THAN
                    BEST SOLUTION

                                                    S18
                  w[k]=0 (k=1,...,n)

                                                    S19                        S20
       ACCUMULATE (INITIAL SOLUTION VALUE E - BEST          OUTPUT BEST SOLUTION
        SOLUTION VALUE E)/SEARCH TIME FOR SEARCH
         UNITS AT NEIGHBORHOOD DEPTH k, AND SET
       AVERAGE OBTAINED BY DIVIDING ACCUMULATED                  END
          VALUE BY NUMBER OF SEARCH UNITS AT
            NEIGHBORHOOD DEPTH k, AS w[k]
```

# FIG. 12

```
        ┌─────────┐
        │  START  │
        └─────────┘
             │
             ▼                              ⌒ S30
┌───────────────────────────────────────────┐
│   RECEIVE NEIGHBORHOOD DEPTH AND INITIAL   │
│                 SOLUTION                   │
└───────────────────────────────────────────┘
             │
             ▼                              ⌒ S31
┌───────────────────────────────────────────┐
│   PERFORM SEARCH FROM INITIAL SOLUTION AT  │
│ DESIGNATED NEIGHBORHOOD DEPTH UNTIL SET END│
│          CONDITION IS SATISFIED            │
└───────────────────────────────────────────┘
             │
             ▼                              ⌒ S32
┌───────────────────────────────────────────┐
│  RESPOND WITH REACHED SOLUTION AND SEARCH  │
│                  TIME                      │
└───────────────────────────────────────────┘
             │
             ▼
        ┌─────────┐
        │   END   │
        └─────────┘
```

# FIG. 13

Europäisches
Patentamt

European
Patent Office

Office européen
des brevets

# EUROPEAN SEARCH REPORT

Application Number

EP 21 16 5516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SANROKU TSUKAMOTO ET AL: "An Accelerator Architecture for Combinatorial Optimization Problems", FUJITSU SCIENTIFIC & TECHNICAL JOURNAL (FSTJ), vol. 53, no. 5, 1 September 2017 (2017-09-01), pages 18-13, XP055673462, * page 8 - page 13, left-hand column, paragraph 1 * | 1-13 | INV. G06N7/00 |
| A | EP 3 660 705 A1 (FUJITSU LTD [JP]) 3 June 2020 (2020-06-03) * the whole document * | 1-13 | |

TECHNICAL FIELDS
SEARCHED (IPC)

G06N

The present search report has been drawn up for all claims

| Place of search | Date of completion of the search | Examiner |
|---|---|---|
| The Hague | 10 September 2021 | Volkmer, Markus |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 21 16 5516

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2021

| Patent document cited in search report | | Publication date | Patent family member(s) | | Publication date |
|---|---|---|---|---|---|
| EP 3660705 | A1 | 03-06-2020 | CN | 111210046 A | 29-05-2020 |
| | | | EP | 3660705 A1 | 03-06-2020 |
| | | | JP | 2020086821 A | 04-06-2020 |
| | | | US | 2020166900 A1 | 28-05-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6309408 A
- JP 2004070662 A
- JP 2019160293 A